# EUROPEAN PATENT SPECIFICATION

(11) **EP 4 408 673 B1**
(45) Date of publication and mention of the grant of the patent: **16.09.2026**
(21) Application number: 22789310.4
(22) Date of filing: 27.09.2022
(51) Int. Cl.: B60B 3/00, B60B 3/04, B60B 3/10, B60B 3/12

(54) **WHEEL DISC FOR A DISC WHEEL AND A DISC WHEEL THEREWITH**
RADSCHEIBE FÜR EIN SCHEIBENRAD UND SCHEIBENRAD DAMIT
DISQUE DE ROUE POUR UNE ROUE LENTICULAIRE ET ROUE LENTICULAIRE DOTÉE DE CELUI-CI

(30) Priority: 30.09.2021 DE 102021125383
(43) Date of publication of application: 07.08.2024
(73) Proprietor: Maxion Wheels Holding GmbH, 53639 Königswinter (DE)
(72) Inventor: BOOS, Achim, 53797 Lohmar (DE); MOTTA, Alexandre Andre Costa, MG 37510-000 São José do Alegre (BR)
(74) Representative: Patentanwälte Buschhoff Hennicke Althaus
(86) International application number: PCT/IB2022/059156
(87) International publication number: WO 2023/052975

(56) References cited:
- DE-A1- 102013 204 845
- DE-U1- 202020 100 517
- JP-A- S57 134 301

## Description

The invention relates to a wheel disc for a disc wheel, in particular for commercial vehicles, with an at least essentially radially extending hub connection flange and with an essentially cylindrical disc rim that can be connected to a wheel rim and with a transition region extending between the disc rim and the hub connection flange. The invention is further directed to a disc wheel, in particular for commercial vehicles, that is equipped with such a wheel disc.

Disc wheels, which are nowadays mainly used for commercial vehicles, essentially consist of two steel moulded parts, namely a wheel rim and a wheel disc, which can be fixed to a wheel hub of the vehicle by means of a hub connection flange extending at least essentially radially by means of wheel bolts or nuts. The wheel disc comprises an essentially cylindrical, circumferential disc rim with which it is welded to a connection region on the inner circumference of the wheel rim. The manufacture of the wheel disc usually takes place on a flow-forming machine by flow-forming or shear-forming by clamping a steel preform in the region of the hub connection flange between an end face of a flow-forming chuck and a hold-down device. The material adjoining the hub connection flange radially outwardly, which may already have been preformed, is subsequently pressed against a flow-forming chuck and stretched by means of spinning rollers as the preform rotates, in order to obtain the desired contour of the transition region and of the disc rim forming at its end. Wheel discs manufactured by flow-forming or shear-forming have uniform surfaces and a good microstructure on their inner and outer sides, whereby they can transmit the loads occurring during vehicle operation well between the rim and the vehicle hub. Methods and devices for flow-forming or shear-forming for the manufacture of wheel discs for vehicle wheels are known, for example, from DE 21 56 551, DE 196 15 675 A1, DE 198 60 732 A1 or EP 1 473 097 B1.

A wheel disc of the generic type for a corresponding disc wheel is known from DE 20 2014 104 068 U, in which the transition region between the central hub connection flange and the radially outer disc rim is subdivided into at least five sections which merge into one another or into the hub connection flange or the disc rim, wherein the sections have a curvature over at least a partial region of their length between their outer and inner end and the curvatures of sections adjacent to one another have different directions of curvature. Thereby, the arrangement is made in such a manner that the individual sections have a greater radial distance from an axis of rotation of the wheel disc at their inner ends than at their outer ends, wherein the wheel disc has a variable material strength in its transition region and the ratios of the material strengths of the individual sections are defined in certain ratios to one another. Further wheel discs are known from documents DE 10 2013 204845 A1, DE 20 2020 100517 U1 and JP S57 134301 A.

Vehicle wheels influence in a not inconsiderable manner not only the driving behaviour of the vehicle equipped with them, but also to a considerable extent determine its fuel consumption and the achievable load capacity. Thereby, a weight of the individual wheels as low as possible has an advantageous effect on the driving behaviour and the consumption. However, weight minimization is regularly associated with a reduction in the material thickness of the wheel disc, whereby stresses in the material are increased, which in turn can have a detrimental effect on load capacity. Even though the known wheel and the wheel disc used therein have proved to be very successful, they can still be improved in terms of their weight.

The object of the invention is to create a wheel disc and a disc wheel provided therewith, wherein on the one hand the lowest possible weight of the wheel can be realized, and on the other hand the strength requirements placed on the wheel disc or the disc wheel provided therewith are reliably fulfilled.

This object is solved with the invention with a wheel disc of the above mentioned type according to the features of independent claim 1.

The wheel disc according to the invention, the special design of which was developed by elaborate finite element methods, is characterized on the one hand by a particularly advantageous material thickness distribution of the disc wall and on the other hand by a special design and arrangement of the ventilation holes provided in the transition region of the wheel disc between the hub connection flange and the disc rim. Surprisingly, it has been shown that in the radially inner part of the transition region, a considerable reduction in the material thickness of the wheel disc material by more than 30%, compared with the material thickness at the central wheel connection flange, results in a considerable reduction in stresses, especially in this region of the disc, whereby an appreciable reduction of the component weight can be achieved while ensuring the required strength. A significant reduction in weight, while also ensuring very good strength, is achieved by the special shape of the ventilation holes, which can be described as approximately drop-shaped. The shape of the ventilation holes with a drop point pointing radially inward towards the connection flange and a hole cross section that widens radially outward starting from the inner pitch circle has proved to be very advantageous for the stress course in the transition region, especially in the material webs (spokes) present between adjacent holes, in that stress peaks are avoided hereby and a high load-carrying capacity can be achieved with comparatively low weight. Tests have shown that, with the measures according to the invention, it is possible to reduce the mass of a disc wheel by about 15% compared with conventional designs while retaining the same load-bearing capacity, and thereby to enable a significant improvement in the fuel efficiency of a vehicle equipped with such a wheel as well as better driving behaviour.

In an advantageous configuration of the invention, the ratio of the material thickness in the radially inner sectional area of the first pitch circle to the material thickness of the hub connection flange can be at most 0.6, preferably no more than 0.5, and in particular less than 0.46. The material thickness in the radially inner sectional area, which, in the sense of the invention, is to be defined as the dimension perpendicular to the outer and inner side of the wheel disc, can thus be less than half the (usual) thickness at the hub connection flange, which actually results in a very considerable weight saving!

In an advantageous, constructive further development of the invention, it can be provided that a material thickness of the transition region on the first pitch circle is at least 50% of the material thickness of the hub connection flange. Finite element simulation of the design has shown that this ensures very good strength of the wheel disc in the load cases considered, despite the ventilation holes on the first pitch circle. Preferably, the ratio of the material thickness at the first pitch circle to the material thickness at the hub connection flange is selected to be greater than 0.54.

When dimensioning the ventilation holes, it was found that the maximum hole width of the ventilation holes is at most 85% of their hole height measured in the radial direction, in particular preferably at most 80%. The maximum hole width of the ventilation holes is located on a third pitch circle, which is located between the first inner pitch circle and the second outer pitch circle. Thereby, the distance between the third pitch circle and the first pitch circle is expediently at most as large and preferably smaller than the distance between the second and the third pitch circle. In this particularly preferred design, the basic shape of the ventilation hole can also be described as egg-shaped.

The ratio of the distance between the first and third pitch circle and the hole height of the ventilation holes is preferably less than or equal to 0.48, in particular less than or equal to 0.47.

As has already been explained, the ventilation holes preferably have an approximately drop- or egg-shaped basic shape with a hole tip facing the first, inner pitch circle, which tip preferably has a narrow radius of curvature, and with a flattening located towards the second, outer pitch circle, which flattening has a second, larger radius of curvature. The ventilation holes are preferably respectively axially symmetrical to the radial plane defining the hole height.

In an advantageous further development of the shape of the ventilation holes, they can have a hole edge curvature between their hole tip and their maximum hole width which, starting from the narrow radius of curvature of the hole tip, increases to at least 6 times, preferably more than 8 times, of the hole tip radius. In a transition region to the maximum hole width, the hole rim curvature can be about 1.5 to 3 times, preferably more than twice of the narrow radius of curvature of the hole tip.

In a disc wheel according to the invention, which is provided with a wheel disc of the type explained above, a preferred embodiment is that a circumferential hump is arranged between the connection region and the rim shoulder adjacent thereto, which hump can reliably prevent the tyre foot of a tyre mounted on the wheel from slipping into the rim well base in the event of large lateral forces occurring. It is thereby particularly advantageous if the hump has an elevation on a part of its circumference with a steep flank facing the connection region, the height and width of which flank is adapted to the arrangement of a valve hole for a tyre inflation valve. That way, an externally accessible inflation valve can be realized even if the height of the hump is selected to be comparatively low and thus a free space between the disc rim and the opposite rim shoulder is comparatively narrow and unhindered access to the valve would be difficult or even impossible without the elevation.

Further characteristics and advantages of the invention result from the following description of a preferred embodiment of the invention represented in the drawings. It shows:
- Fig. 1: an upper half or generatrix of a wheel disc of a steel disc wheel according to the invention in radial section;
- Fig. 2: a representation of one of the ventilation holes in the transition region of the wheel disc according to the invention; and
- Fig. 3: the disc wheel according to the invention in a radial section representation of the upper half of the wheel.

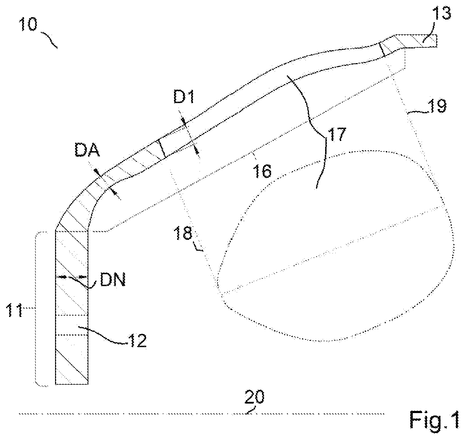

Fig.1 shows a radial section (generatrix) of an upper half of a wheel disc 10 according to the invention, which in a known manner has a radially extending hub connection flange 11 with several bolt holes 12, by means of which the wheel provided with the wheel disc 10 can be fastened to a wheel hub, not shown, of a commercial vehicle.

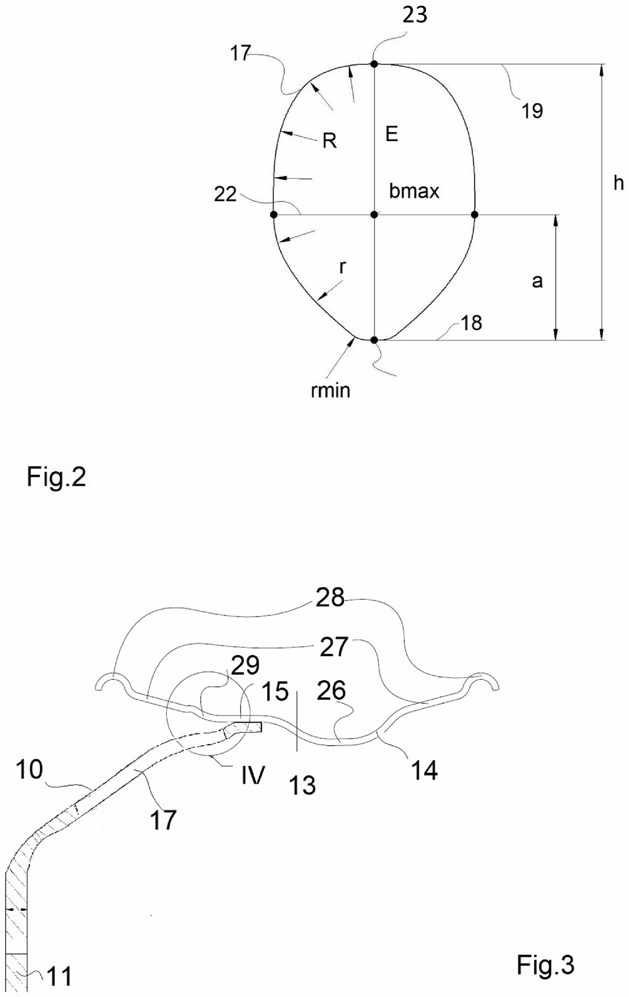

The wheel disc 10 further has a cylindrical disc rim 13, with which it is welded to a wheel rim 14 (Fig. 3) at a connection region 15, which in the wheel according to the invention shown is located laterally next to a rim well base, as will be described in detail below.

Between the disc rim 13 and the hub connection flange 11 extends a transition region 16 connecting the two parts 11, 13, the particular design of which transition region is an essential characteristic of the present invention.

As can be seen from the drawing, several ventilation holes 17 are provided in the transition region 16, which holes are evenly distributed around the disc circumference and extend in the radially outer section of the transition region 16, which is located further out towards the disc rim, between a radially inner first pitch circle 18 and a second, radially outer pitch circle 19. At their inner end pointing radially inward toward the axis of rotation 20 of the wheel, the ventilation holes 17 are essentially pointed with a rounded hole tip 21 with a comparatively narrow hole tip radius rmin. Starting from the first, inner pitch circle 18 towards the second, outer pitch circle 19, the hole width of the ventilation holes increases, and namely to a maximum hole width bmax, which lies on a third pitch circle 22, which is located between the first and the second pitch circle 18, 19. In the preferred embodiment of the invention, the ratio of the distance a between the first and the third pitch circle to the hole height h of the ventilation holes 17, thus the distance between the first and second pitch circle, is thereby less than/equal to 0.47. The maximum width bmax of the ventilation holes 17 is thus closer to the first than to the second pitch circle. In their respective radially outer region, the ventilation holes are provided with a flattening 23 located towards the second pitch circle 19, which flattening merges with outer radii of curvature R into lateral hole regions.

The ventilation holes are axially symmetrical to the radial plane E defining the hole height h. In the radially more inner hole region of the ventilation holes between the hole tip 21 and the maximum hole width bmax on the third pitch circle 22, the hole rim curvature r increases from the narrow (minimum) radius of curvature rmin to about 8 times thereof, in order to then decrease again to about 2.5 times of the hole tip radius rmin in the transition region to the maximum hole width. Thus, in the lower, radially inner part of the ventilation holes, an approximately triangular wall shape results, as in an isosceles triangle. The overall shape of the ventilation holes can be described as drop- or egg-shaped.

In addition to the special shape of the ventilation holes, the design of the wheel disc according to the invention is characterized by a special ratio of the material thickness in the sectional area 24 lying radially inward of the first pitch circle 18 to the material thickness at the hub connection flange 11, wherein this material thickness ratio explained below has an independent inventive character. As can be seen in particular in Fig. 1, the material thickness DN at the hub connection flange is essentially constant. In the sectional area 24 adjoining the hub connection flange 11 on the outside, the material thickness DA continuously reduces to less than 0.46 of the material thickness DN at the hub connection flange, wherein this minimum material thickness DA is reached approximately halfway between the transition from the hub connection flange 11 to the inner sectional area 24 and the first pitch circle 18. From there, the thickness increases again to a value D1, which then reaches at least 50% of the material thickness DN at the hub connection flange at the first pitch circle 18 and which is preferably greater than 0.54 times of the thickness DN at the hub connection flange there. By reducing the material thickness in the sectional area 24 lying radially inward of the first pitch circle 18 to less than half, actually less than 46%, of the thickness DN of the hub connection, stresses in this part of the wheel disc 10 are minimized and, surprisingly, a particularly good stability of the wheel is achieved with a reduced weight compared to known wheels. The special design of the ventilation holes 17, which have a larger cross section than the holes in known wheels, also contribute significantly to the weight reduction without adversely affecting the stability of the wheel or its wheel disc.

Fig.3 shows a vehicle wheel 25 which is advantageously equipped with the wheel disc 10 described above. The wheel rim 14 used with the vehicle wheel 25 has an inner rim well base 26, two axially outer rim shoulders 27 and rim flanges 28 delimiting these on the outer and inner rim of the rim 14. The connection region 15 for the disc rim 13 of the wheel disc is arranged between the rim well base 26 and the outer rim shoulder 27A. The disc rim 13 is welded to the rim in a known manner on the inside of the connection region over its circumference. A circumferential, comparatively low hump 29 is formed between the connection region 15 and the outer rim shoulder 27A, which hump prevents unintentional slipping of a tyre mounted on the rim into the rim well base, for example during brisk cornering, as is known.

## Claims

1. A wheel disc for a disc wheel, in particular for commercial vehicles, with an at least essentially radially extending hub connection flange (11), with an essentially cylindrical disc rim (13) which can be connected to a wheel rim (14) and with a transition region (16) extending between the disc rim (13) and the hub connection flange (11), **wherein** the transition region (16) is provided with ventilation holes (17) distributed over the circumference, wherein the ventilation holes (17) extend in the radial direction from a first inner pitch circle (18) located closer to the connection flange (11) to a second outer pitch circle (19) located closer to the disc rim (13), wherein the transition region (16) in radial section in a first sectional area (24) extending between the hub connection flange (11) and the radially inner first pitch circle (18) has a minimum material thickness (DA) reduced by at least 30% in relation to a material thickness (DN) of the hub connection flange (11) **characterized in that** the ventilation holes (17) have a hole region with a hole width (b) in disc circumference direction increasing from the radially inner first pitch circle (18) towards the radially outer second pitch circle (19) to a maximum hole width (bmax) of the ventilation holes (17), wherein the maximum hole width (bmax) lies on a third pitch circle (22) between the first inner pitch circle (18) and the second outer pitch circle (19), and wherein the maximum hole width (bmax) of the ventilation holes (17) is at most 85% of a hole height (h) of the ventilation holes (17) measured in the radial direction.

2. The wheel disc according to claim 1, **characterized in that** the ratio of the minimum material thickness (DA) in the first sectional area (24) to the material thickness (DN) of the hub connection flange (11) is at most 0.6, preferably no more than 0.5, and in particular is less than 0.46.

3. The wheel disc according to claim 1 or 2, **characterized in that** a material thickness (D1) of the transition region (16) at the first pitch circle (18) is at least 50% of the material thickness (DN) of the hub connection flange (11).

4. The wheel disc according to claim 3, **characterized in that** the ratio of the material thickness (D1) at the first pitch circle (18) to the material thickness (DN) at the hub connection flange (11) is greater than 0.54.

5. The wheel disc according to one of claims 1 to 4, **characterized in that** the maximum hole width (bmax) of the ventilation holes (17) is at most 80%.

6. The wheel disc according to one of claims 1 to 5, **characterized in that** the distance (a) between the third pitch circle (22) and the first pitch circle (18) is at most as great, and preferably smaller than the distance between the second (19) and the third pitch circle (22).

7. The wheel disc according to claim 6, **characterized in that** the ratio of the distance (a) between the first (18) and the third pitch circle (22) and the hole height (h) of the ventilation holes (17) is smaller than/equal to 0.48 and in particular smaller than/equal to 0.47.

8. The wheel disc according to one of claims 1 to 7, **characterized in that** the ventilation holes (17) have an approximately drop- or egg-shaped basic shape with a hole tip (21) pointing towards the first, inner pitch circle (18) having a narrow radius of curvature (rmin), and a flattening (23) located towards the second, outer pitch circle (19) having a second radius of curvature (R).

9. The wheel disc according to one of claims 1 to 8, **characterized in that** the ventilation holes (17) are respectively axially symmetrical with respect to the radial plane (E) defining the hole height (h).

10. The wheel disc according to claim 8 and/or 9, **characterized in that** the ventilation holes (17) have a hole rim curvature (r) between their hole tip (21) and their maximum hole width (bmax), which curvature, starting from the narrow radius of curvature (rmin) of the hole tip (21), increases to at least 6 times, preferably more than 8 times, of the hole tip radius (rmin).

11. Wheel disc according to one of claims 8 to 10, **characterized in that** the hole rim curvature (r) in a transition region to the maximum hole width (bmax) is approximately 1.5 to 3 times, preferably more than twice, of the narrow radius of curvature (rmin) of the hole tip (21).

12. A vehicle disc wheel, in particular for commercial vehicles, with a wheel rim (14) having an inner rim well base (26) and two axially outer rim shoulders (27) with rim flanges (28) delimiting these rim shoulders (27) at the outer and inner end of the rim (14) and an essentially cylindrical connection region (15) arranged between one of the rim shoulders (27) and the rim well base (26), to the inner side of which connection region a disc rim (13) of a wheel disc is connected, **characterized in that** the wheel disc is according to one of claims 1 to 11, , wherein in particular, the disc rim is welded to the inner side of the connection region .

13. The vehicle disc wheel according to claim 12, **characterized in that** a circumferential hump (29) is arranged between the connection region (15) and the rim shoulder (27A) adjacent thereto.

## Patentansprüche

1. Radschüssel für ein Scheibenrad, insbesondere für Nutzfahrzeuge, mit einem sich zumindest im Wesentlichen radial erstreckenden Nabenanschlussflansch (11) und mit einem im Wesentlichen zylindrischen, an einer Radfelge (14) anschließbaren Schüsselrand (13) sowie mit einem sich zwischen dem Schüsselrand (13) und dem Nabenanschlussflansch (11) erstreckenden Übergangsbereich (16), **wobei** der Übergangsbereich (16) mit über den Umfang verteilt angeordneten Lüftungslöchern (17) versehen ist, wobei sich die Lüftungslöcher (17) in Radialrichtung von einem näher zum Anschlussflansch (11) gelegenen ersten inneren Teilkreis (18) zu einem näher zum Schüsselrand (13) gelegenen, zweiten äußeren Teilkreis (19) erstrecken, wobei der Übergangsbereich (16) im Radialschnitt in einem ersten, sich zwischen dem Nabenanschlussflansch (11) und dem radial innen liegenden ersten Teilkreis (18) erstreckenden Abschnittsbereich (24) eine im Verhältnis zu einer Materialdicke (DN) des Nabenanschlussflansches (11) um mindestens 30% reduzierte minimale Materialdicke (DA) aufweist, **dadurch gekennzeichnet, dass** die Lüftungslöcher (17) einen Lochbereich mit einer vom radial inneren, ersten Teilkreis (18) hin zum radial äußeren, zweiten Teilkreis (19) zunehmenden Lochbreite (b) in Schüsselumfangsrichtung aufweisen, wobei die maximale Lochbreite (bmax) der Lüftungslöcher (17) auf einem dritten Teilkreis (22) zwischen dem ersten, inneren Teilkreis (18) und dem zweiten äußeren Teilkreis (19) liegt, und wobei die maximale Lochbreite (bmax) der Lüftungslöcher (17) höchstens 85% ihrer in Radialrichtung gemessenen Lochhöhe (h) beträgt.

2. Radschüssel nach Anspruch 1, **dadurch gekennzeichnet, dass** das Verhältnis der minimalen Materialdicke (DA) im ersten Abschnittsbereich (24) zur Materialdicke (DN) des Nabenanschlussflansches (11) höchstens 0,6, vorzugsweise nicht mehr als 0,5 beträgt und insbesondere kleiner als 0,46 ist.

3. Radschüssel nach Anspruch 1 oder 2, **dadurch gekennzeichnet, dass** eine Materialdicke (D1) des Übergangsbereichs (16) am ersten Teilkreis (18) mindestens 50% der Materialdicke (DN) des Nabenanschlussflanschs (11) beträgt.

4. Radschüssel nach Anspruch 3, **dadurch gekennzeichnet, dass** das Verhältnis der Materialdicke (D1) am ersten Teilkreis (18) zur Materialdicke (DN) am Nabenanschlussflansch (11) größer ist als 0,54.

5. Radschüssel nach einem der Ansprüche 1 bis 4, **dadurch gekennzeichnet, dass** die maximale Lochbreite (bmax) der Lüftungslöcher (17) höchstens 80% beträgt

6. Radschüssel nach einem der Ansprüche 1 bis 5, **dadurch gekennzeichnet, dass** der Abstand (a) zwischen dem dritten Teilkreis (22) und dem ersten Teilkreis (18) höchstens so groß und bevorzugt kleiner ist als der Abstand zwischen dem zweiten (19) und dem dritten Teilkreis (22).

7. Radschüssel nach Anspruch 6, **dadurch gekennzeichnet, dass** das Verhältnis des Abstands (a) zwischen dem ersten (18) und dritten Teilkreis (22) und der Lochhöhe (h) der Lüftungslöcher (17) kleiner/gleich ist als 0,48 und insbesondere kleiner/gleich 0,47 ist.

8. Radschüssel nach einem der Ansprüche 1 bis 7, **dadurch gekennzeichnet, dass** die Lüftungslöcher (17) eine etwa tropfen- oder eiförmige Grundform mit einer zum ersten, inneren Teilkreis (18) weisenden Lochspitze (21) mit einem engen Krümmungsradius (rmin) und einer zum zweiten, äußeren Teilkreis (19) hin gelegenen Abflachung (23) mit einem zweiten Krümmungsradius (R) aufweist.

9. Radschüssel nach einem der Ansprüche 1 bis 8, **dadurch gekennzeichnet, dass** die Lüftungslöcher (17) jeweils achsensymmetrisch zur die Lochhöhe (h) definierenden Radialebene (E) sind.

10. Radschüssel nach Anspruch 8 und/oder 9, **dadurch gekennzeichnet, dass** die Lüftungslöcher (17) zwischen ihrer Lochspitze (21) und ihrer maximalen Lochbreite (bmax) eine Lochrandkrümmung (r) aufweisen, die ausgehend von dem engen Krümmungsradius (rmin) der Lochspitze (21) auf mindestens das 6-fache, vorzugsweise mehr als das 8-fache, des Lochspitzenradius (rmin) ansteigt.

11. Radschüssel nach einem der Ansprüche 8 bis 10, **dadurch gekennzeichnet, dass** die Lochrandkrümmung (r) in einem Übergangsbereich zur maximalen Lochbreite (bmax) etwas das 1,5- bis 3-fache, vorzugsweise mehr als das doppelte des engen Krümmungsradius (rmin) der Lochspitze (21) beträgt.

12. Fahrzeug-Scheibenrad, insbesondere für Nutzfahrzeuge, mit einer Radfelge (14), die ein innen liegendes Felgentiefbett (26) sowie zwei axial außen liegende Felgenschultern (27) mit diese Felgenschultern (27) am Außenrand und Innenrand der Felge (14) begrenzenden Felgenhörnern (28) und einem zwischen einer der Felgenschultern (27) und dem Felgentiefbett (26) angeordneten, im Wesentlichen zylindrischen Anschlussbereich (15) aufweist, an dessen Innenseite ein Schüsselrand (13) einer Radschüssel angeschlossen ist, **dadurch gekennzeichnet, dass** die Radschüssel gemäß einem der Ansprüche 1 bis 11 ausgebildet ist, wobei vorzugsweise die Radschüssel an der Innenseite des Anschlussbereichs angeschweißt ist.

13. Fahrzeug -Scheibenrad nach Anspruch 12, **dadurch gekennzeichnet, dass** zwischen dem Anschlussbereich (15) und der an diesem angrenzenden Felgenschulter (27A) ein umlaufender Hump (29) angeordnet ist.

## Revendications

1. Disque de roue destiné à une roue à disque, en particulier pour véhicules utilitaires, comportant une bride de raccordement au moyeu (11) s'étendant au moins essentiellement dans le sens radial, une jante de disque (13) essentiellement cylindrique pouvant être raccordée à une jante de roue (14), et une zone de transition (16) s'étendant entre la jante de disque (13) et la bride de raccordement au moyeu (11), **dans lequel** la zone de transition (16) est pourvue de trous d'aération (17) répartis sur la circonférence, les trous d'aération (17) s'étendant dans la direction radiale depuis un premier cercle de pas intérieur (18), situé plus près de la bride de raccordement (11), jusqu'à un deuxième cercle de pas extérieur (19), situé plus près de la jante de disque (13), la zone de transition (16), en coupe radiale, dans une première zone de section (24) s'étendant entre la bride de raccordement du moyeu (11) et le premier cercle primitif radialement intérieur (18), présente une épaisseur minimale de matériau (DA) réduite d'au moins 30 % par rapport à une épaisseur de matériau (DN) de la bride de raccordement du moyeu (11), **caractérisée en ce que** les trous d'aération (17) présentent une zone de trou dont une largeur (b) qui, dans la direction circonférentielle du disque, augmente depuis le premier cercle de pas radialement intérieur (18) vers le deuxième cercle de pas radialement extérieur (19) jusqu'à une largeur maximale (bmax) des trous d'aération (17), la largeur maximale (bmax) se situant sur un troisième cercle de pas (22) entre le premier cercle de pas intérieur (18) et le deuxième cercle de pas extérieur (19), et dans lequel la largeur maximale (bmax) des trous d'aération (17) représente au plus 85 % d'une hauteur (h) des trous d'aération (17) mesurée dans la direction radiale.

2. Disque de roue selon la revendication 1, **caractérisé en ce que** le rapport entre l'épaisseur minimale de matériau (DA) dans la première zone de section (24) et l'épaisseur de matériau (DN) de la bride de raccordement au moyeu (11) est au plus égal à 0,6, de préférence ne dépasse pas 0,5, et en particulier est inférieur à 0,46.

3. Disque de roue selon la revendication 1 ou 2, **caractérisé en ce que** l'épaisseur de matériau (D1) de la zone de transition (16) au niveau du premier cercle primitif (18) est d'au moins 50 % de l'épaisseur de matériau (DN) de la bride de raccordement au moyeu (11).

4. Disque de roue selon la revendication 3, **caractérisé en ce que** le rapport entre l'épaisseur de matériau (D1) au niveau du premier cercle primitif (18) et l'épaisseur de matériau (DN) au niveau de la bride de raccordement au moyeu (11) est supérieur à 0,54.

5. Disque de roue selon l'une des revendications 1 à 4, **caractérisé en ce que** la largeur maximale (bmax) des trous d'aération (17) est au plus égale à 80 %.

6. Disque de roue selon l'une des revendications 1 à 5, **caractérisé en ce que** la distance (a) entre le troisième cercle de pas (22) et le premier cercle de pas (18) est au plus égale, et de préférence inférieure, à la distance entre le deuxième (19) et le troisième cercle de pas (22).

7. Disque de roue selon la revendication 6, **caractérisé en ce que** le rapport entre la distance (a) entre le premier cercle de pas (18) et le troisième cercle de pas (22) et la hauteur (h) des trous d'aération (17) est inférieur ou égal à 0,48 et, en particulier, inférieur ou égal à 0,47.

8. Disque de roue selon l'une des revendications 1 à 7, **caractérisé en ce que** les trous d'aération (17) présentent une forme de base approximativement en goutte ou en œuf, avec une pointe de trou (21) orientée vers le premier cercle de pas intérieur (18) présentant un rayon de courbure étroit (rmin), et un aplatissement (23) situé vers le deuxième cercle de pas extérieur (19) présentant un deuxième rayon de courbure (R).

9. Disque de roue selon l'une des revendications 1 à 8, **caractérisé en ce que** les trous d'aération (17) sont respectivement à symétrie axiale par rapport au plan radial (E) définissant la hauteur (h) du trou.

10. Le disque de roue selon la revendication 8 et/ou 9, **caractérisé en ce que** les trous d'aération (17) présentent une courbure du bord du trou (r) entre leur pointe (21) et leur largeur maximale (bmax), laquelle courbure, partant du rayon de courbure minimal (rmin) de la pointe du trou (21), augmente jusqu'à atteindre au moins 6 fois, de préférence plus de 8 fois, le rayon de la pointe du trou (rmin).

11. Disque de roue selon l'une des revendications 8 à 10, **caractérisé en ce que** la courbure du bord du trou (r) dans une zone de transition vers la largeur maximale du trou (bmax) est d'environ 1,5 à 3 fois, de préférence plus de deux fois, le rayon de courbure minimal (rmin) de la pointe du trou (21).

12. Roue à disque pour véhicule, en particulier pour véhicules utilitaires, comprenant une jante (14) présentant une base de creux de jante interne (26) et deux épaulements de jante axialement extérieurs (27) avec des rebords de jante (28) délimitant ces épaulements de jante (27) aux extrémités extérieure et intérieure de la jante (14), ainsi qu'une zone de raccordement essentiellement cylindrique (15) disposée entre l'un des épaulements de jante (27) et la base du creux de jante (26), sur le côté intérieur de laquelle est raccordé un rebord de disque (13) d'un disque de roue, **caractérisée en ce que** le disque de roue est conforme à l'une des revendications 1 à 11, dans laquelle, en particulier, le rebord de disque est soudé au côté intérieur de la zone de raccordement.

13. La roue à disque de véhicule selon la revendication 12, **caractérisée en ce qu'un** renflement circonférentiel (29) est disposé entre la zone de raccordement (15) et l'épaulement de jante (27A) adjacent à celle-ci.
